# EUROPEAN PATENT SPECIFICATION

(11) **EP 0 336 663 B1**
(45) Date of publication and mention of the grant of the patent: **24.08.1994**
(21) Application number: 89303224.3
(22) Date of filing: 31.03.1989
(51) Int. Cl.: F16K 7/06, F16K 37/00

(54) **Valve for fluids**
Ventil für Fluide
Soupape pour fluides

(30) Priority: 05.04.1988 US 177971; 30.09.1988 US 252257; 19.12.1988 US 286327
(43) Date of publication of application: 11.10.1989
(73) Proprietor: WHITEY CO., Highland Heights, OH 44143 (US)
(72) Inventor: Yusko, Edward J., Jr., Denmark Ohio (US); Brown, Cal Rolland, North Euclid Ohio 44143 (US); Kalain, Terry M., Willoughby Ohio 44094 (US); Williams, Peter Charles, Cleveland Heights Ohio 44121 (US)
(74) Representative: Jones, Colin

(56) References cited:
- EP-A- 0 013 898
- DD-A- 107 970
- DE-A- 2 307 035
- DE-A- 2 526 548
- DE-B- 1 091 388
- FR-A- 1 029 136
- FR-A- 1 512 580
- GB-A- 1 099 932
- US-A- 3 350 053
- US-A- 3 695 576
- US-A- 3 954 251
- US-A- 3 982 724

## Description

This invention relates to fluid flow regulation or control and more particularly to shutoff type flow valves. The invention is particularly applicable to a type of valve known as a pinch valve for use in a biotechonological environment. The pinch valve incorporates a flexible, substantially tubular member which is selectively compressed along an exterior portion to close a central flow passage and will be described with particular reference thereto. However, the invention has broader applications and may be advantageously employed in other environments and applications.

Handling of biotechnological components requires an ultra-clean environment and special safeguards to minimise damage to biological material, such as elongated chains. Specifically, a smooth, reliable shutoff arrangement is required and dependable drainability of the flow line is necessary to prevent entrapment of the biological material. Only certain types of materials may be utilised in the valve construction due to the potential for interaction with the biological material in the fluid. Typically, pinch valves incorporate a flexible or elastomeric sleeve which is released and compressed along an exterior portion to open and close a central fluid passage defined through the sleeve. The life cycle of such a flexible sleeve is dependent on the strength and wear characteristics of the elastomeric material. Particularly, closing the valve places the sleeve under tensile forces which repeated flexing or cycling, tends to become stretched and unusable.

For example, US-A- 3,350,053 describes some of the problems inherent with pinch valves utilised in the industry. One solution proposed in that patent to the repeated flexing of the elastomeric sleeve is to reduce the diameter to length ratio of the valve body and sleeve to as low a value as possible. It is believed that this ratio reduction provides a compact structure that limits the stretching of the resilient material of the sleeve.

Another avenue of approach for increasing the cycle life of the sleeve is to limit forces tending to pull end flanges of the sleeve towards the centre of the valve. The solution offered by US-A- 3,350,053 to this problem is to employ a preselected bulge moulded into the sleeve between the end flanges. In this manner, the sleeve is positioned in an unstretched, slack arrangement and a valve-actuating member has a predetermined range of movement that takes up the slack moulded into the sleeve. Thus, the sleeve experiences reduced, if any, tensile forces as a result of actuator movement to a closed position. Although suitable for some fluid applications, it is considered desirable to eliminate the bulge moulded into the sleeve in other applications because of the potential for entrapment of biological material and variation in the flow passage configuration that disrupts the pursuit of laminar flow conditions.

Useful life of the sleeve is not only dependent on the resilient nature of the flexing sleeve but also on the magnitude of closure forces imposed thereon. A fine line exists between effective closure force and undue or excessive force which physically crushes the elastomeric sleeve. It is not believed that a suitable valve structure has been defined that compensates and controls closure forces on the sleeve.

Yet another problem associated with remotely operated valves of this type is the lack of any indication of the valve open and closed positions. It is critical to readily determine whether or not fluid flow is shut off so that downstream operations for repair, servicing, and the like may be conducted. Prior pinch valve structures have failed to address this situation adequately.

Still another area of concern is the drainability of the valve that may be effected through the type of actuation mechanism or repeated flexing of the valve sleeve. Although the elastomeric materials utilised in the make-up of the valve sleeve have resilient properties, continued flexing or cycling results in stretching or permanent deformation of the valve sleeve. If the sleeve is closed through the application of peripheral forces along a bottom portion of the sleeve as is common in prior pinch valve structures, stretching or deformation may result. This, in turn, inhibits drainability of the valve after the valve has been in use for an extended period of time since fluid upstream of the actuating area of the sleeve will not freely drain along the bottom portion.

As indicated above, some pinch valve arrangements utilise end flanges in an effort to grip the valve sleeve in the body. The use of flanges has met with substantial commercial success but the sleeve configuration has provided some difficulty in maintenance and replacement situations. Prior arrangements have failed to resolve the problems inherent with repair and replacement of the valve sleeve.

The necessity for an ultra-clean environment requires that components handling biological materials be frequently and thoroughly cleaned. For example, prior valves have been autoclaved, i.e. subject to sterilising action using superheated steam under pressure. The entire valve body is heated during the sterilising process, which heating can have adverse effects on the operation of the valve.

An object of the invention is to provide a new and improved pinch valve arrangement which overcomes at least some of the above-mentioned problems and others and provides an easily assembled, reliable valve structure.

An object of the present invention, is to provide an improved pinch valve arrangement particularly adapted for biotechnological environments.

GB-A-1099932 discloses a valve comprising a body; a flexible member received in a bore extending axially through said body and having a passage therethrough; a closure member received in said body for linear reciprocation transversely of said passage and in said body forLreciprocation transversely of said passage and adapted to engage said flexible member for opening and closing said passage upon retraction from and advancement towards said flexible member; and an actuation member separate from the closure member for retracting and advancing the latter.

This known valve is provided with a toggle mechanism for advancing and retracting the closure member.

The valve according to the present invention is characterised in that the actuation member is linearly reciprocable in said body transversely thereof between retracted and advanced positions for retracting and advancing the closure member and a lost motion coupling is provided between said closure member and said actuation member for limiting the force applied by the closure member to the flexible member when the actuation member is actuated to its advanced position to advance the closure member to close said passage.

One advantage of the invention resides in the improved operation of the valve sleeve of a pinch valve.

Another advantage is found in the ultra-clean valve that results from this structure.

Still another advantage is realised in the ease of replacing or maintaining the valve sleeve of a pinch valve.

The invention is further described with reference to the accompanying drawings, wherein Figs 1 to 14 relate to pinch valves in which the actuation member and closure member form an integral unit or are attached and to which the principal of the invention, as illustrated by way of example in Figs. 15 and 16 may be applied and wherein:

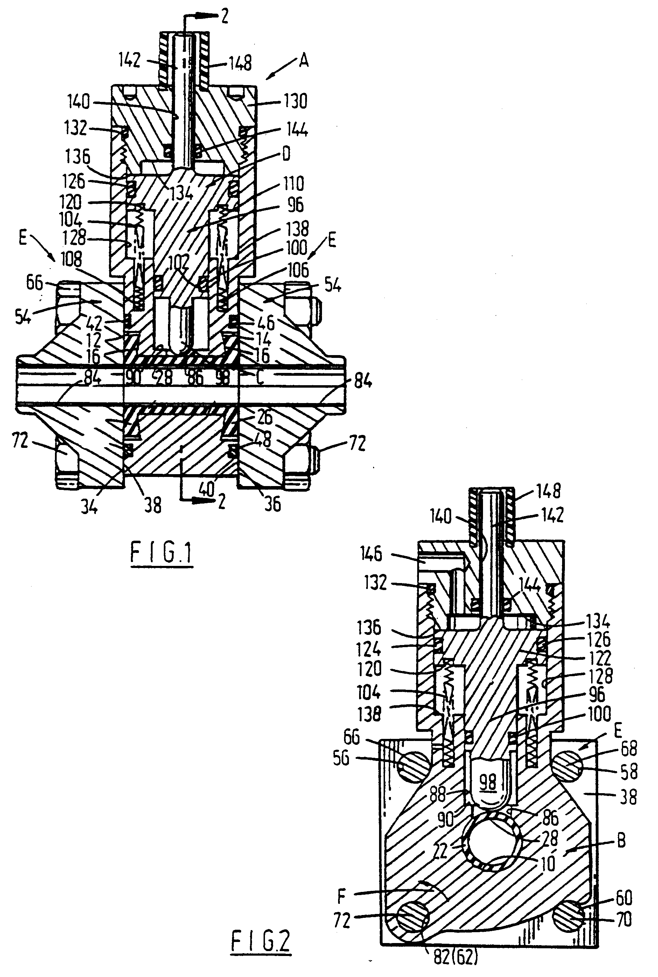

Fig. 1 is a vertical, longitudinal sectional view of a pinch valve;
Fig. 2 is a view generally along the lines 2-2 of Fig. 1.

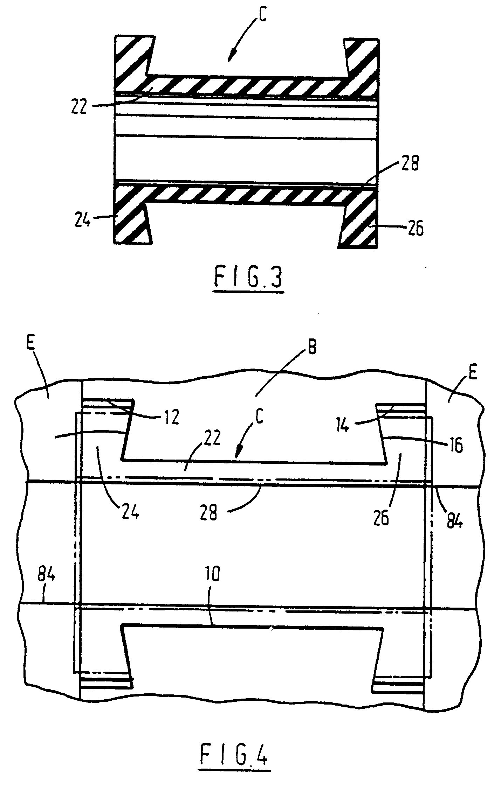

Fig. 3 is a longitudinal sectional view of the valve sleeve of the valve according to the invention;
Fig. 4 in an enlarged sectional view illustrating the stressed and unstressed states of the elastomeric sleeve and co-operation with the valve body;

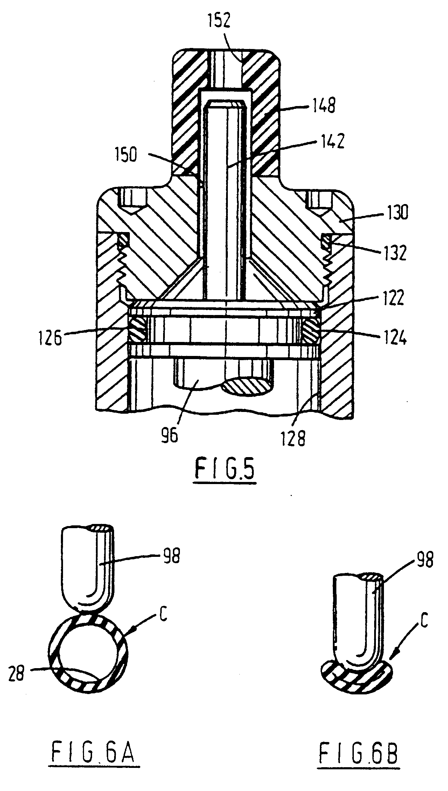

Fig. 5 is a sectional view of a modified arrangement of a fluid operated actuator for the pinch valve;
Fig. 6A is a representation of the valve sleeve and actuating member in a valve-open position;
Fig. 6B is a representation of the actuating member and sleeve in a valve-closed position;

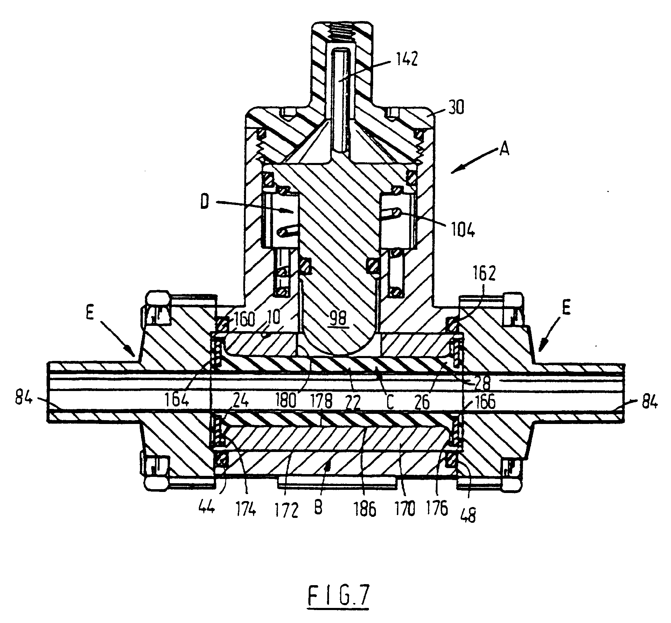

Fig. 7 is a longitudinal sectional view of a modified pinch valve structure;

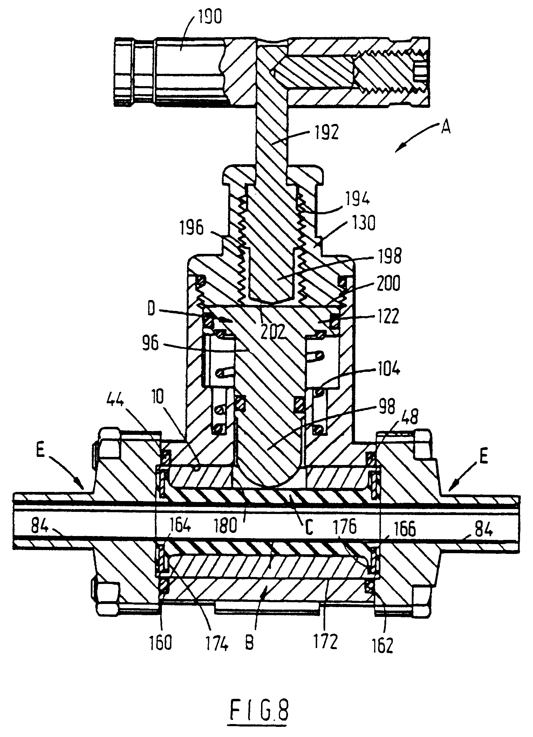

Fig. 8 is a longitudinal sectional view of a manually actuated arrangement of the modified pinch valve structure of Fig. 7;

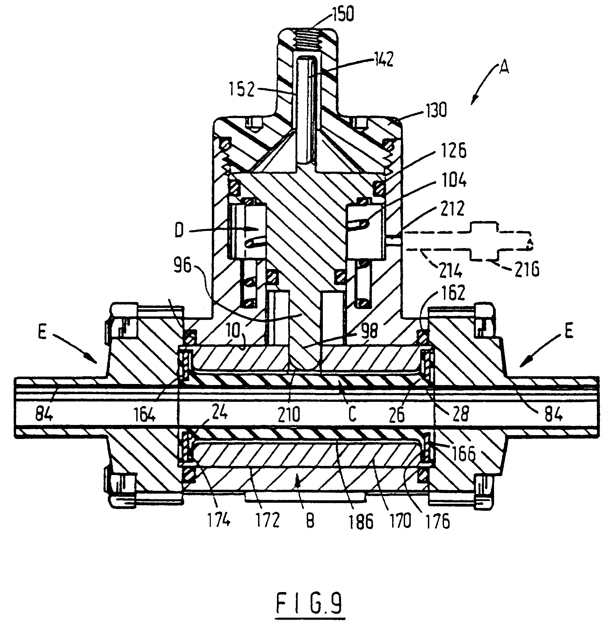

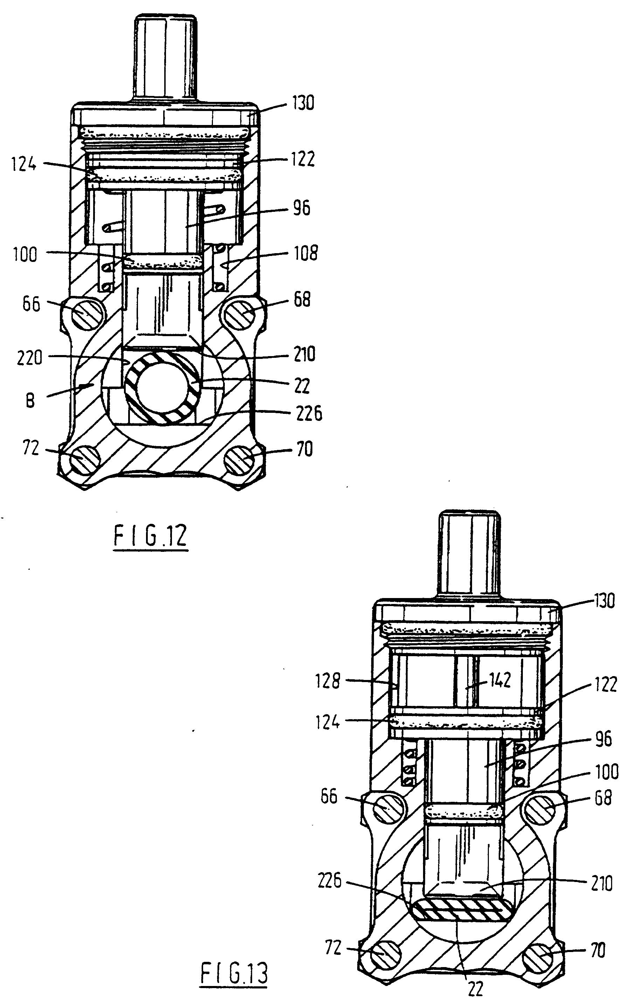

Fig. 9 is a longitudinal sectional view of another modified pinch valve structure;

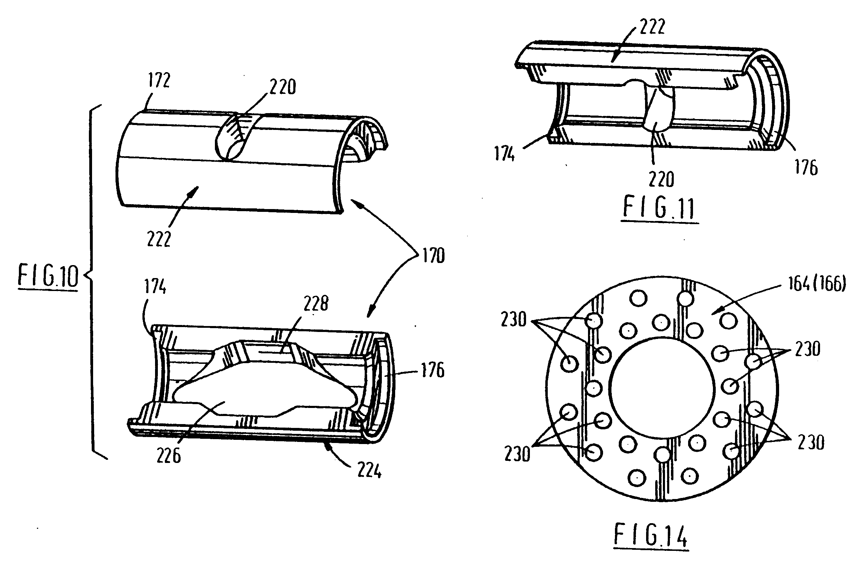

Fig. 10 is an exploded perspective view of a modified casing member;
Fig. 11 is a perspective view of the underside of one of the casing member components illustrated in Fig. 10;
Fig. 12 is a cross-sectional view of a pinch valve in an open position incorporating the modified casing member of Figs. 10 and 11;
Fig. 13 is a view similar to Fig. 12 but illustrating the valve in a closed position;
Fig. 14 is a plan of a modified reinforcing ring for incorporation into a pinch valve sleeve;

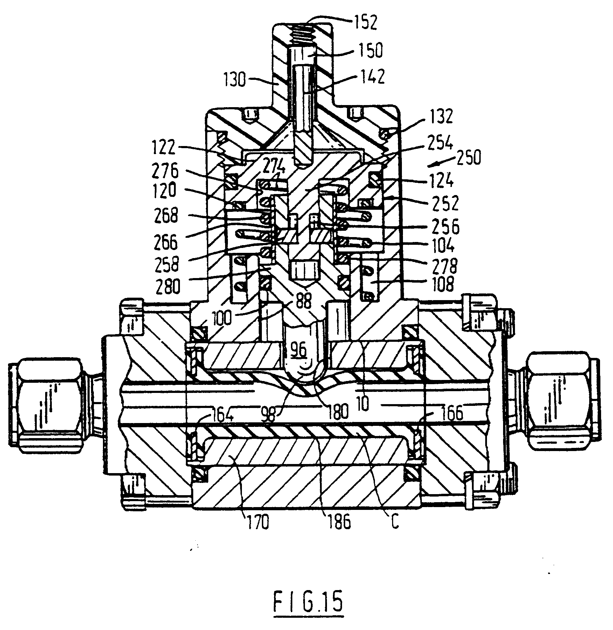

Fig. 15 is a longitudinal sectional view of a pinch valve according to one embodiment of the invention; and

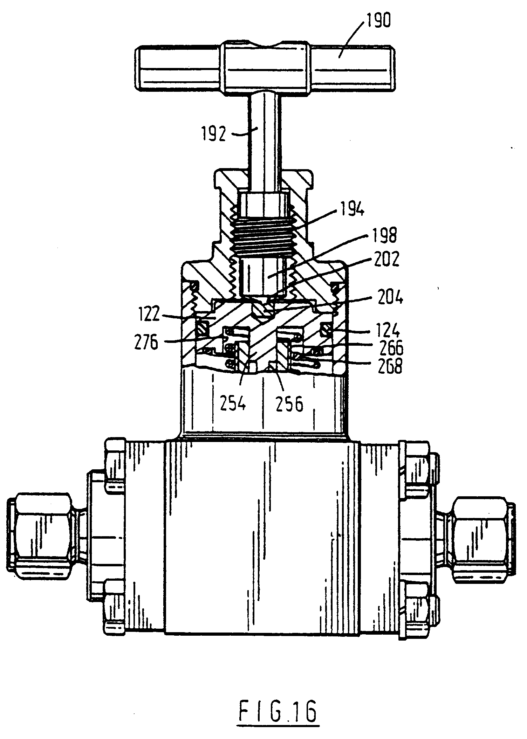

Fig. 16 is a partially sectioned view of a modified pinch valve as substantially shown in Fig. 15 but using a manually actuated assembly.

Referring now to the drawings, a pinch valve A has a central valve body B, a flexible elastomeric sleeve C, an actuating mechanism D, and opposed valve body end members E.

More particularly and with reference to the embodiments of Figs. 1 and 6, the valve body is of rigid construction, preferably stainless steel. An axial bore 10 extends through the body for receipt of the elastomeric sleeve C. First and second counterbores 12, 14 are formed at opposite ends of the bore for reasons which will become more apparent hereinbelow. Each counterbore defines a substantially radially extending shoulder 16 with the bore. The shoulders 16 are configured to extend axially inwardly as they extend radially outwardly away from the bore 10 to the respective counterbore sidewall.

The sleeve C includes a substantially cylindrical central portion 22 having an outer peripheral dimension closely received in the bore 10. Enlarged radially extending flanges 24, 26 are defined at opposite ends of the sleeve. The flanges increase in axial dimension as they extend radially outwardly from a central opening 28 of the sleeve. That is, the configuration of the flanges approximates to the configurations of counterbores 12, 14 in which they are respectively received.

The end members E are received on opposite ends of the central valve body B to matingly engage first and second end walls 34, 36 of the valve body. Specifically, substantially planar walls 38, 40 abuttingly engage the end walls 34, 36 respectively. A first groove 42 is defined in the end wall 34 to receive seal member 44 and, likewise, second groove 46 is defined in end wall 36 to receive a seal member such as O-ring 48. The seal members provide a back-up seal arrangement between the central valve body and the end members as will become more apparent below. Since the end members are of identical construction, description of one end member will be equally applicable to the other end members unless noted otherwise.

An enlarged portion 54 of end member E is disposed adjacent the valve body and has four substantially equally spaced openings 56, 58, 60, 62 adapted to receive fastening means, such as nut and bolt type fasteners 66, 68, 70, 72. The fasteners extend freely through the enlarged portions of the end members and three of them, namely, 66, 68, 70 are disposed along peripheral portions of the valve body B (Fig. 2). The fourth fastener 72 extends through a lobe portion 80 of the central valve body B. The lobe portion 80 has an axially extending opening 82 which is concentric with openings 62 of the end members E when the valve is assembled.

As described in US-A- 3,954,251, this valve body and fastener arrangement enables the central valve body B to be swung out relative to the valve body end members E by removal of a single fastener after slackening of the other three fasteners. Particularly, removal of fastener 66 permits the valve body B to rotate around fastener 72 in a counterclockwise manner as illustrated by arrow F. This structural arrangement facilitates ease of replacement of the seal members 44, 48 or provides access to the elastomeric sleeve C if replacement or maintenance is necessary. Throughout the change-over process, the central valve body B, is held in axial position relative to the end members E such that proper realignment is achieved merely by swinging the central body B back into its original position shown in Fig 2.

The end members E also have through passages 84 which define either an inlet or an outlet to the central valve body B. Suitable connections between the through passages and an associated fluid system can be made through well known pipe or fluid connection means as conventionally used in the art. When the valve is assembled, the passages 84 and sleeve openings 28 define a straight flow-through passage of substantially constant diameter that limits potential shearing of the biological material in the fluid and promotes laminar flow.

As illustrated in Figs. 1 and 2, a bore 86 extends through the central valve body B and substantially perpendicular to bore 10. Counterbore 88 extends coaxially from bore 86 and defines a radial shoulder 90 therewith. The actuating mechanism D includes a closure member 96 having a reduced diameter tip 98 dimensioned for close receipt through bore 86. The tip 98 preferably has a rounded end for engagement with cylindrical portion 22 of the sleeve as will be described in greater detail below. The tip can have a blade-like configuration as apparent in Figs. 1 and 2 or a cylindrical configuration as illustrated in Figs. 6A and 6B. Still other tip configurations having a rounded end can be used without departing from the scope of the invention.

A seal member, such as O-ring 100, is received in a peripheral groove 102 on the closure member 96 to seal between the closure member and counterbore 88. According to the preferred embodiment, the closure member cooperates with a biasing means such as spring 104. The spring has a first or lower end 106 received in an annular recess 108. The second or upper end 110 of the spring is received in an annular groove 120 of a piston 122 of the closure member 96. Receipt of opposite ends of the spring in the recess and groove maintains alignment of the closure member 96 in counterbore 88 and normally biases the closure member 96 outwardly to a valve-open position. A seal member, such as O-ring 124, is received in a peripheral groove 126 of the piston 122 to sealingly engage a second enlarged counterbore 128 in the valve body B. A closure cap 130 is threadedly received in an upper end of the valve body B and is sealingly engaged therewith by means of yet another seal member, such as O-ring 132. Additionally, an inner end of the closure cap has a reduced diameter recess 134 which extends outwardly from a stop shoulder 136 which limits outward biasing movement of the piston 122 and closure member 96. Shoulder 138 defined between counterbores 88, 128 defines a stop surface which limits inward movement of the piston 122.

An opening 140 extending from the centre of the recess 134 receives therethrough a stem 142 extending outwardly from an upper face of the piston 122. In the embodiment of Figs. 1 and 2, the stem 142 is slidably and sealingly received through the opening 140 by means of seal member 144. Thus, an inlet 146 is also formed in the closure cap to permit fluid, such as air under pressure, to selectively enter recess 134 and overcome the bias of spring 104, thereby advancing the piston 122 and closure member 96 towards the elastomeric sleeve C. The tip 98 is advanced against the cylindrical portion of the sleeve and "pinches" the sleeve to a closed position (Fig 6B). Removal of the air pressure from inlet 146 permits the spring 104 to bias the piston 122 and closure member 96 back to a normally-open position, thus restoring the tip and sleeve to the Fig. 6A position.

A transparent shroud 148 extends outwardly from the closure cap 130 and receives the outer end of the stem 142. In a valve-open position, the stem 142 is clearly visible through the shroud 148. On the other hand, in the valve-closed position, the closure member 96 has moved downwardly to pinch the elastomeric valve sleeve C so that the stem 142 is not to be seen through the shroud. This provides a positive visual indication of the valve-open and valve-closed positions.

According to the modified actuator embodiment of Fig. 5, the lateral inlet 146 is omitted from the closure cap 130 and opening 140 is enlarged to define an annular inlet passage 150. The shroud 148 has an opening 152 at its outer end for communication with an external fluid supply (not shown) to permit fluid flow to the upper face of the piston 122. This arrangement provides for a dual use of the shroud 148 as both a valve-open/closed indicator and the inlet for the remote actuator system. Still further, the modified actuator arrangement eliminates the use of one sliding seal member, namely seal member 144. In all other respects, the modified valve structure of Fig. 5 operates as described with respect to the previous embodiment.

When used in ultra-clean environments, such as the biotechnological applications discussed above, it is critical that all crevices in the fluid flow passage be eliminated to minimise the chance for entrapment of particles. To accomplish this objective, and with particular reference to Fig. 4, the unstressed configuration of the elastomeric sleeve C is illustrated in phantom while the final, assembled configuration is shown in solid lines. The axial dimension of the unstressed sleeve is somewhat greater than that of the central valve body B. When the end members E, are brought into an assembled, sealing engagement with the valve body B, the sleeve C is axially compressed which results in a number of benefits. Particularly, the cross-sectional dimension of the sleeve opening 28 is reduced to closely approximate that of openings 84 in the end members E. Stated another way, axial compression of the sleeve provides a radial thickening of the sleeve to eliminate any crevices between the body and end members. An unobstructed, straight flow-through passage is thus defined by the assembled valve.

Axial compression of the sleeve C also provides a primary seal between the end members E and the valve body B. Thus, seal members 44, 48 are secondary seals that guard against fluid loss should the elastic element rupture. They are not the primary seals. The radially outward expansion of the flanges also promotes a secure mechanical engagement between the sleeve and the valve body along the shoulders 16 of the first and second counterbores 12, 14. This prevents pullout of the flanges resulting from forces imposed by the closure member 96 advancing and retracting between open and closed positions.

Yet another advantage is realised by the compression of the valve sleeve C. In prior arrangements a predetermined bulge was moulded into the central portion of the sleeve to accommodate the tensile forces on the sleeve by the pinch arrangement. By axially compressing the sleeve in the present invention and placing the sleeve in a compressive state, tensile forces do not arise in the sleeve until a point much later in the closing stroke of the closure member 96. That is, the initial portion of the closing stroke transforms the sleeve from a compressive state to a neutral or non-compressive state. Further pinching of the valve sleeve during the closing stroke results in tensile forces in the valve sleeve but these tensile forces are not encountered until much later in the closing stroke than with previous structures. Thus, the overall valve design has a higher cycle life rating due to the lower tensile forces. Concurrently the pullout forces imposed on the flanges are reduced.

As is also apparent, the valve sleeve is only pinched from the upper side by the actuating mechanism as opposed to pinching from diametrically opposite sides of the sleeve. This is important from the aspect that the lower side of the valve sleeve C as shown is Figs. 1 and 2 never undergoes any cycling or deformation. In the biotechnological field it is imperative that the flow passage be not obstructed or form any traps for the fluid. By not actuating the lower portion of the valve sleeve drainability is enhanced.

Figs. 7 and 8 illustrate a further modification to the general valve construction described above. For ease of discussion and illustration, like numerals identify like components while new numerals identify new elements. The major modification resides in the valve sleeve C and its receipt in the axial bore 10 of the valve body. More specifically, the bore 10 is of substantially constant dimension and communicates with counterbores 160, 162 at opposite ends. The counterbores receive seal members 44, 48 which provide the same back-up seal arrangement between the central valve body B, and the end members as described above with respect to the O-rings 44, 48 in Fig. 1. Rather than providing separate grooves in an area radially spaced from the bore 10, the modified structure permits the counterbores 160, 162 to receive the seal members and advantageously function in the same manner.

The valve sleeve C includes enlarged radially extending flanges 24, 26 defined on opposite ends of cylindrical central portion 22. According to this embodiment, though, the flanges maintain a generally constant axial dimension as they extend radially outward from central opening 28 of the sleeve. To provide the same secure mechanical engagement between the sleeve C and the valve body B, rigid metal rings 164, 166 are embedded in the sleeve flanges. More particularly, the rings 164, 166 are bonded through a suitable process to the elastomeric material of the valve sleeve. The rings 164, 166 serve a plurality of purposes. Primarily, these rings assure a close dimensional fit between the compressed valve sleeve C and the end members E. Stated in another manner, in the assembled valve, the cross-sectional dimension of the sleeve opening 28 closely approximates to that of openings 84 in the end members E and the rings 164, 166 assure that a close tolerance is achieved therebetween.

Secondly, the metal rings 164, 166 serve the purpose of imparting sufficient rigidity to the flanges for the axial compression imposed on the sleeve C by the end members to form a primary sealing surface between the sleeve C and the end members E.

Due to the difficulty in repairing and replacing valve sleeves C in a body configuration such as shown in the embodiment of Fig. 1, the sleeve is modified to include a second component comprising a casing member 170. The casing member is substantially cylindrical and has an outer peripheral dimension 172 closely received in the axial bore 10 of the valve body. Smoothly contoured recesses 174, 176 are defined at opposite ends of the casing member and merge into a substantially constant diameter opening 178 which closely receives the central portion 22, of the valve sleeve C. Preferably, the casing member 170 is formed of a material more rigid than that of the flexible valve sleeve C. By way of example only, some preferred materials of construction include plastic or metal. This provides a sufficient backup surface for the sleeve C as it is compressed axially during assembly of the valve. The casing member 170 also includes a sidewall opening 180 which receives the rounded end 98 of the closure member.

The two-part cartridge arrangement defined by the valve sleeve C and casing member 170 facilitates ease of replacement and maintenance of the pinch valve. The substantially constant-dimensioned outer periphery 172 of the casing member permits the cartridge arrangement to be axially slid within the bore 10. The entire cartridge arrangement can be replaced as a unit and eliminates any on-site manipulation of the enlarged radial flanges of the valve sleeve as encountered with an arrangement according to Fig. 1

In a still further modification, the outer diameter of the valve sleeve C may be provided with a support layer such as fabric reinforcement 186. This maintains some body or form to the flexible valve sleeve C and provides a smooth transition surface between the flexible nature of the elastomeric sleeve and the more rigid construction of the casing member 170. Alternatively, more than one support layer may be utilised if deemed necessary.

The entire closure cap 30 in the embodiment of Fig. 7 is formed from a transparent plastic material to aid in monitoring the stem 142 of the actuating mechanism. This provides a positive indication of the valve-open or valve-closed position as described above.

In the manually actuated valve arrangements of Figs. 8 and 16, rotation of handle 190 advances and retracts handle or actuating stem 192 relative to the closure cap 130. The means for advancing and retracting the actuating stem results from the well-known use of an external threaded region 194 on the stem and internaly threaded opening 196 in the closure cap 130. A lower end 198 of the actuating stem 192, engages an upper surface 200 of the piston 122 to advance the rounded end 98 of the closure member 96 to a closed, pinched arrangement of the valve sleeve. In the pneumatically actuated version illustrated in Fig. 7, the actuating mechanism D is axially reciprocated in response to the selective application of fluid pressure to the upper surface of the piston. Spring 104 returns the piston and actuating mechanism to a normally-open position. In order to increase valve life, and particularly the cycle life of the flexible sleeve C, in the manually actuated valve it is necessary to minimise the transmission of torque between the selectively rotatable actuating stem 192 and the sleeve C. Means for minimising the torque transmission is provided by the stem gimbal or domed end 202 defined on the lower end of the stem 192. The gimbal is a substantially conical surface which provides point contact with the closure member 96. Thus, axial advancement of the closure member 96 is effected though the point contact without the transfer of rotary motion from the actuating stem 192 to the closure member 96. Additionally, an actuator bearing 204 can be provided in the upper surface of the piston for engagement with the stem gimbal, as shown in Fig. 16.

Turning now to Fig. 9, the pinch valve shown there is structurally similar to the modified embodiment of Fig, 7. Therefore, like elements are identified by like numerals and new elements are identified by new numerals. The closure member 96 also includes a reduced diameter tip 98 having a rounded end. Unlike the blade configuration of Figs. 1 and 2 or the cylindrical configuration of Figs. 6A and 6B, the rounded tip defines a substantially horizontal, semi-cylindrical surface 210. Further reference to Figs. 12 and 13 assist in visualisation of the configuration of surface 210. This modified tip distributes the closing forces over a larger surface of the sidewall of the flexible sleeve. This structural arrangement provides effective closure of the valve and increases the useful life of the flexible sleeve C.

Another modification of Fig. 9 is directed to a means for venting the valve body. Specifically, the venting means is defined by a vent or weep opening 212 and the elimination of seal member 100 from the reduced diameter tip 98 of the closure member. This combination vents the valve body, particularly the normally sealed area defined by opening 86 and counterbore 88 around the flexible sleeve. The venting means permits the area outside the flexible elastomer sleeve to openly communicate or breathe with the ambient environment.

Incorporation of the venting means eliminates pneumatic closure forces that arise during valve cleaning. Typically, the pinch valve is autoclaved, i.e. subject to a sterilising process that uses superheated steam under pressure. The entire valve body is subject to a temperature increase during the autoclaving process. In the embodiments illustrated in Figs. 1 to 8, the area outside the flexible sleeve is sealed from ambient air. Thus, pressure in the closed area rises as the temperature rises and the pressure imposes a pneumatic closure force on the flexible sleeve. The described venting means eliminates this undesirable action.

Another advantage resulting from the venting means is that if the flexible sleeve C fails, leakage through the vent opening is readily detected. As illustrated in phantom in Fig. 9, a sight pipe or tube 214 may be connected to the vent opening. The sight pipe aids in detection and to minimise spillage if a leak occurs. When processing expensive biological batches, minimising a spill can have a major economic effect and/or permit salvaging the remainder of a batch before contamination develops.

Some biological fluids cannot be leaked into the environment under any circumstances. With such constraints, it is still desirable to eliminate pneumatic closure forces. One proposed solution is to provide selective venting of the area outside the flexible sleeve. Accordingly, a valve schematically represented at 216 may be secured to the sight pipe for selective communication between the valve body interior and ambient air. By way of example, selective operation of the venting means, particularly valve 216, provides an open path during temperature excursions such as steam-in-place autoclaving and a closed path during biological batch processing.

Referring again to Fig. 9, and with additional reference to Figs. 10 and 13, the horizontal semi-cylindrical tip surface 210 will be described in greater detail. To accommodate this tip configuration, the casing member 170 is modified. The sidewall opening has a substantially elongated or elliptical shape 220 to freely receive the tip 210 therethrough. A first or upper component 222 of the two-part casing member 170 maintains the smoothly contoured outer periphery 172 which is adapted for close receipt in the bore 10. Likewise, the interior shape remains substantially the same for closely receiving the flexible sleeve C,

On the other hand, the interior shape of a second or lower component 224 of the casing member 170 is altered to accommodate the "pinched" or closed valve sleeve C. Preferably, a planar area 226 extends longitudinally and transversely along the interior surface of the lower component 224. The planar area provides sufficient area into which the pinched sleeve may expand. Extending the planar area longitudinally along substantially the entire casing member, that is, from end to end, prohibits formation of a dip or weir in the flexible sleeve that would impair fluid drainability through the valve. The lateral extent of the planar area decreases as it extends longitudinally from a substantially constant dimension central region 228. Again, this facilitates receipt of the pinched sleeve in the lower component 224 without constricting the flow channel. Stated in another manner, the pinching action of the tip 210 is not constrained by abrupt contours in the lower component of the casing member. The flexible sleeve C deforms as a result of the pinch action of the tip 210 and not from abrupt changes in the interior shape of the lower component.

Lastly, the reinforcing or rigid rings 164, 166 may be modified as illustrated in Fig. 14. Apertures 230 are disposed in a predetermined pattern and extend completely through the rings. The apertures 230 permit elastomer flow during moulding manufacture of the reinforced flexible sleeves C. The apertures, in turn, aid in bonding between the rings and flexible sleeve to provide integral, reinforced end flanges 24, 26.

A means for limiting closure forces imposed on the flexible sleeve C in a pinch valve according to the invention is particularly shown in Figs. 15 and 16. The force limiting means 250 is defined by a lost motion coupling 252 interconnecting piston or actuating member 122 with the closure member 96. Relative movement between the piston 122 and the closure member 96 is thus permitted with the coupling.

More specifically, the piston 122 and the closure member 96 have been modified from the integral arrangement illustrated in Figs. 1 to 14. The modified piston 122 includes a stem portion 254 extending axially from a lower face of the piston. The stem portion 254 has an axially extending slot or keyway 256 which slidingly receives a key 258.

The closure member 96, on the other hand, includes a recess 264 which closely receives the stem portion 254. The key 258 is fixedly secured to the closure member by a retainer 266, so that axial movement between the closure member and the piston is limited by the axial extent of slot 256. Further, spring 268 defines a means for biasing the piston 122 and the closure member 96 to a first position. A first or upper end 274 of the spring 268 is received in annular groove 276 on the lower face of the piston 122. The second or lower end 278 of the spring engages a radially extending shoulder 280 on the closure member 96 to urge the closure member towards the flexible sleeve C.

In operation, and with reference to the air-operated pinch valve of Fig. 15, pressurised fluid is supplied to the upper face of the piston 122 through passage 150. The piston 122 and the closure member 96 move substantially as a unitary member towards the flexible sleeve C to close the valve. During the closing movement, the piston 122 will bottom out in the counterbore 128 but the closure member 96 will not bottom out in recess 276 of the piston. In other words, in a valve-closed position, the biasing force of spring 268 will maintain the sleeve C in a closed position. The spring force can thus be chosen to limit crushing forces from being imposed on the flexible sleeve which might otherwise result if the closing force is dependent entirely on air operated system.

The manually-actuated embodiment of Fig. 16 operates in much the same manner. Substantially the same actuating member 122, closure member 96, and lost motion coupling (252) can be utilised. This facilitates ease of manufacture. The bearing 204 replaces the indicator stem 142 and the actuating or handle stem 192 operatively engages the actuating member (122) through the bearing.

## Claims

1. A valve comprising a body (B); a flexible member (C) received in a bore (10) extending axially through said body (B) and having a passage (28) therethrough; a closure member (96) received in said body (B) for linear reciprocation transversely of said passage (28) and adapted to engage said flexible member (C) for opening and closing said passage upon retraction from and advancement towards said flexible member (C); and an actuation member (122) separate from the closure member (96) for retracting and advancing the latter;
characterised in that the actuation member (122) is linearly reciprocable in said body (B) transversely thereof between retracted and advanced positions for retracting and advancing the closure member (96) and a lost motion coupling (252) is provided between said closure member (96) and said actuation member (122) for limiting the force applied by the closure member (96) to the flexible member (C) when the actuation member (122) is actuated to its advanced position to advance the closure member (96) to close said passage (28).

2. A valve as claimed in claim 1, wherein said lost motion coupling (252) comprises a slot (256) and key (258) inter-connection.

3. A valve as claimed in claim 1 or 2, wherein said closure member (96) is biassed relative to said actuation member (122) to limit the force applied by the closure member (96) to the flexible member (C).

4. A valve as claimed in claim 1 or 2, in which said actuation member (122) operatively engages said closure member (96) through said lost-motion coupling, whereby said closure member (96) can move relative to said actuation member (122) through a predetermined range of movement.

5. A valve as claimed in claim 4, wherein said actuation member (122) is biased by a spring (104) to the open or closed position.

6. A valve as claimed in claim 5, wherein a second spring (268) is interposed between said actuation member (122) and said closure member (96).

7. A valve as claimed in any of claims 1 to 6, wherein said actuation member comprises a piston (122).

8. A valve as claimed in any of claims 1 to 6, wherein an actuating handle (190) acts on the actuation member (122) for manual operation.

9. A valve as claimed in any of claims 1 to 8, further comprising means (212) for venting said body at an area encompassing said flexible member.

10. A valve as claimed in claim 9, wherein said venting means (212) is provided with a valve (216) for selectively venting said body.

11. A valve as claimed in any of claims 1 to 10, wherein said flexible member (C) has first and second enlarged flanges (24, 26) at its axially opposite ends, said flanges having tapered configurations which increase in axial dimension as said flanges extend radially outwardly.

12. A valve as claimed in any of claims 1 to 10, wherein said flexible member (C) has first and second enlarged flanges (24, 26) at its axially opposite ends, said flanges each including a rigid ring (164, 166) disposed therein.

13. A valve as claimed in claim 12, wherein said rigid rings (164, 166) have apertures (230) therethrough facilitating connection to said flanges.

14. A valve as claimed in any of claims 1 to 13, wherein said flexible member (C) is axially compressed between first and second end members (E) in the assembled valve.

15. A valve as claimed in claim 14, wherein said valve body (B) has a pinch opening (86) disposed substantially
perpendicular to said body opening (10) and wherein said body (B) further has a guide portion (88) extending coaxially from said pinch opening (86) and said guide portion (88) is dimensioned to receive a stem of said closure member (96) for maintaining linear movement of said closure member.

16. A valve as claimed in claim 15, wherein a seal member (100) is interposed between said stem of said closure member (96) and said guide portion (88).

17. A valve as claimed in claim 14, 15 or 16, wherein said closure member (96) has a smooth, rounded end (98) for engaging said flexible member (C).

18. A valve as claimed in claim 17, wherein said closure member (96) has a cylindrical configuration with a rounded, spherical end (98).

19. A valve as claimed in claim 17, wherein said closure member (96) has a blade like configuration with a smooth, rounded end (98).

20. A valve as claimed in claim 17, wherein said closure member has a substantially semi-cylindrical end (210).

21. A valve as claimed in any of claims 1 to 20, wherein said actuation member (122) has an indicating stem (142) at its end remote from said closure member (96) such that said indicating stem (142) extends outwardly from said body (B) in a valve-open position.

22. A valve as claimed in any of claims 1 to 21, in which a casing member (170) is received around said flexible member (C) and has an outer diametrical dimension adapted for close receipt in the axial bore (10) of said valve body (B), and said casing member (170) has an aperture (220) extending through a sidewall thereof and the closure member (96) is adapted for close receipt through said aperture (220).

23. A valve as claimed in claim 21, wherein said flexible member (C) has a reinforcing layer (186) along a peripheral portion thereof.

24. A valve as claimed in claim 8, wherein said handle (190) is on a handle stem (192) and means (202,204) are provided for minimising transmission of torque from said handle stem (192) to said actuation member (122).

25. A valve as claimed in claim 24, wherein said torque minimising means has a substantially conical surface defined on said actuating member (122) or on said actuating stem (192).

26. A valve as claimed in claim 22 or 23, wherein said casing member (170) has a planar area (226) along an interior surface thereof to accommodate lateral expansion of said flexible member (C) during valve-closure.

## Patentansprüche

1. Ventil, umfassend einen Körper (B), ein flexibles Element (C), das von einer axial durch den genannten Körper (B) verlaufenden Bohrung (10) aufgenommen wird und durch das sich ein Kanal (28) erstreckt, ein in dem genannten Körper (B) aufgenommenes Schließelement (96) zur linearen Hin- und Herbewegung quer zu dem genannten Kanal (28), das in das genannte flexible Element (C) eingreift, um den genannten Kanal nach der Rückwärtsbewegung von und der Vorwärtsbewegung zu dem genannten flexiblen Element (C) zu öffnen und zu schließen; und ein Betätigungselement (122) getrennt von dem Schließelement (96) zum Vor- und Zurückbewegen des Letzteren; dadurch gekennzeichnet, daß sich das Betätigungselement (122) in dem genannten Körper (B) linear und quer zu diesem zwischen einer rückwärtigen und einer vorwärtigen Positionen hin- und herbewegt, um das Schließelement (96) vor- und zurückzubewegen, und dadurch, daß eine Totgangkupplung (252) zwischen dem genannten Schließelement (96) und dem genannten Betätigungselement (122) zum Begrenzen der Kraft vorgesehen ist, die durch das Schließelement (96) auf das flexible Element (C) aufgebracht wird, wenn das Betätigungselement (122) in seine vorwärtige Position bewegt wird, um das Schließelement (96) zum Schließen des genannten Kanals (98) vorzubewegen.

2. Ventil nach Anspruch 1, wobei die genannte Totgangkupplung (252) eine Langloch- (256) und Keilnut- (258) -verbindung aufweist.

3. Ventil nach Anspruch 1 oder 2, wobei das genannte Schließelement (96) relativ zu dem genannten Betätigungselement (122) vorgespannt ist, um die Kraft zu begrenzen, die das Schließelement (96) auf das flexible Element (C) aufbringt.

4. Ventil nach Anspruch 1 oder 2, wobei das genannte Betätigungselement (122) durch die genannte Totgangkupplung betriebsmäßig in das genannte Schließelement (96) eingreift, so daß sich das genannte Schließelement (96) relativ zu dem genannten Betätigungselement (122) über eine vorbestimmte Strecke bewegen kann.

5. Ventil nach Anspruch 4, wobei das genannte Betätigungselement (122) durch eine Feder (104) in die offene oder geschlossene Position vorgespannt werden kann.

6. Ventil nach Anspruch 5, wobei eine zweite Feder (268) zwischen dem genannten Betätigungselement (122) und dem genannten Schließelement (96) angeordnet ist.

7. Ventil nach einem der Ansprüche 1 bis 6, wobei das genannte Betätigungselement einen Kolben (122) aufweist.

8. Ventil nach einem der Ansprüche 1 bis 6, wobei für einen manuellen Betrieb ein Betätigungsgriff (190) auf das Betätigungselement (122) wirkt.

9. Ventil nach einem der Ansprüche 1 bis 8, weiter umfassend ein Mittel (212) zum Entlüften des genannten Körpers in einem Bereich, der das genannte flexible Element umschließt.

10. Ventil nach Anspruch 9, wobei das genannte Entlüftungsmittel (212) mit einem Ventil (216) zum selektiven Entlüften des genannten Körpers ausgestattet ist.

11. Ventil nach einem der Ansprüche 1 bis 10, wobei das genannte flexible Element (C) einen ersten und einen zweiten vergrößerten Flansch (24, 26) an seinen axial gegenüberliegenden Enden aufweist, wobei die genannten Flansche konisch zulaufende Formen aufweisen, deren axiale Abmessungen mit den genannten, radial nach außen verlaufenden Flanschen zunehmen.

12. Ventil nach einem der Ansprüche 1 bis 10, wobei das genannte flexible Element (C) einen ersten und einen zweiten vergrößerten Flansch (24, 26) an seinen axial gegenüberliegenden Enden aufweist, wobei in den genannten Flanschen jeweils ein starrer Ring (164, 166) angeordnet ist.

13. Ventil nach Anspruch 12, wobei Öffnungen (230) durch die starren Ringe (164, 166) hindurch verlaufen, die eine Verbindung der genannten Flansche erleichtern.

14. Ventil nach einem der Ansprüche 1 bis 13, wobei das genannte flexible Element (C) zwischen dem ersten und dem zweiten Endelement (E) axial in dem zusammengebauten Ventil zusammengedrückt wird.

15. Ventil nach Anspruch 14, wobei der genannte Ventilkörper (B) eine im wesentlichen lotrecht zu der genannten Körperöffnung (10) angeordnete Quetschöffnung (86) aufweist und wobei der genannte Körper (B) außerdem einen Führungsteil (88) aufweist, der koaxial von der genannten Quetschöffnung (86) verläuft, und wobei der genannte Führungsteil (88) so dimensioniert ist, daß er einen Schaft des genannten Schließelementes (96) zur Erhaltung der linearen Bewegung des genannten Schließelementes aufnimmt.

16. Ventil nach Anspruch 15, wobei ein Dichtungselement (100) zwischen dem genannten Schaft des genannten Schließelementes (96) und dem genannten Führungsteil (88) angeordnet ist.

17. Ventil nach Anspruch 14, 15 oder 16, wobei das genannte Schließelement (96) ein glattes, gerundetes Ende (98) für den Eingriff in das genannte flexible Element (C) aufweist.

18. Ventil nach Anspruch 17, wobei das genannte Schließelement (96) eine zylindrische Form mit einem gerundeten, sphärischen Ende (98) aufweist.

19. Ventil nach Anspruch 17, wobei das genannte Schließelement (98) eine blattartige Form mit einem glatten, gerundeten Ende (98) aufweist.

20. Ventil nach Anspruch 17, wobei das genannte Schließelement ein im wesentlichen halbzylindrisches Ende (210) aufweist.

21. Ventil nach einem der Ansprüche 1 bis 20, wobei das genannte Betätigungselement (122) einen Anzeigeschaft (142) an seinem von dem genannten Schließelement (96) entfernten Ende aufweist, so daß der genannte Anzeigeschaft (142) von dem genannten Körper (B) in einer ventiloffenen Position nach außen verläuft.

22. Ventil nach einem der Ansprüche 1 bis 21, wobei ein Gehäuseelement (170) um das genannte flexible Element (C) herum aufgenommen wird und einen Außendurchmesser für eine Paßsitz-Aufnahme in der axialen Bohrung (10) des genannten Ventilkörpers (B) aufweist, und wobei das genannte Gehäuse (170) eine durch eine Seitenwand verlaufende Öffnung (220) aufweist und wobei das Schließelement (96) im Paßsitz von der genannten Öffnung (220) aufgenommen wird.

23. Ventil nach Anspruch 21, wobei das genannte flexible Element (C) eine Verstärkungsschicht (186) entlang eines Umfangsteils aufweist.

24. Ventil nach Anspruch 8, wobei sich der genannte Griff (190) auf einem Griffschaft (192) befindet und wobei Mittel (202, 204) zur Minimierung der Übertragung von Drehmoment von dem genannten Griffschaft (192) auf das genannte Betätigungselement (122) vorgesehen sind.

25. Ventil nach Anspruch 24, wobei die genannten Mittel zur Minimierung von Drehmoment eine im wesentlichen konische Oberfläche aufweisen, die auf dem genannten Betätigungselement (122) oder auf dem genannten Betätigungsschaft (192) definiert ist.

26. Ventil nach Anspruch 22 oder 23, wobei das genannte Gehäuse (170) einen ebenen Bereich (226) entlang einer Innenfläche aufweist, um eine seitliche Ausdehnung des genannten flexiblen Elements (C) während des Schließens des Ventils aufzunehmen.

## Revendications

1. Vanne comprenant un corps (B); une pièce flexible (C) logée dans un alésage (10) passant dans l'axe à travers ledit corps (B) et ayant un passage (28) en travers; une pièce de fermeture (96) logée dans ledit corps (B) pour un mouvement linéaire alternatif transversal dudit passage (28) et adapté pour engager ladite pièce flexible (C) pour ouvrir et fermer ledit passage lors du retrait de ladite pièce flexible (C) et de son avance; et une pièce de commande (122) séparée de la pièce de fermeture (96) pour le retrait et l'avance de celle-ci;
caractérisée en ce que la pièce de commande (122) est susceptible de mouvement alternatif dans ledit corps (B) transversalement à celui-ci entre les positions retirée et avancée pour le retrait et l'avance de la pièce de fermeture (96) et un accouplement avec mouvement à vide (252) est prévu entre ladite pièce de fermeture (96) et ladite pièce de commande (122) pour limiter la force exercée par ladite pièce de fermeture (96) sur la pièce flexible (C) quand la pièce de commande (122) est actionnée à sa position avancée pour avancer la pièce de fermeture (96) pour fermer ledit passage (28).

2. Vanne selon la revendication 1, caractérisée en ce que ledit accouplement à mouvement à vide (252) comprend une interconnexion par fente (256) et clavette (258).

3. Vanne selon les revendications 1 et 2, caractérisée en ce que ladite pièce de fermeture (96) est préchargée par rapport à ladite pièce de commande (122) pour limiter l'effort exercé par la pièce de fermeture (96) sur la pièce flexible (C).

4. Vanne selon les revendications 1 ou 2, caractérisée en ce que ladite pièce de commande (122) s'engage lors du fonctionnement avec ladite pièce de fermeture (96) par l'intermédiaire dudit accouplement à mouvement à vide, ce qui fait que ladite pièce de fermeture (96) peut se déplacer par rapport à ladite pièce de commande (122) selon une gamme de mouvements fixée à l'avance.

5. Vanne selon la revendication 4, caractérisée en ce que ladite pièce de commande (122) est pré chargée par un ressort (104) vers la position ouverte ou fermée.

6. Vanne selon la revendication 5, caractérisée en ce qu'un second ressort (268) est interposé entre ladite pièce de commande (122) et ladite pièce de fermeture (96).

7. Vanne selon les revendications 1 à 6, caractérisée en ce que la dite pièce de commande comprend un piston (122).

8. Vanne selon les revendications 1 à 6, caractérisée en ce qu'une poignée de commande (190) agit sur la pièce de commande (122) pour le fonctionnement manuel.

9. Vanne selon les revendications 1 à 8, comprenant aussi un moyen (212) d'aération dudit corps dans une zone entourant ladite pièce flexible.

10. Vanne selon la revendication 9, caractérisée en ce que ledit moyen d'aération (212) est équipé d'une Vanne (216) pour aérer ledit corps de manière sélective.

11. Vanne selon une ou plusieurs des revendications 1 à 10, caractérisée en ce que ladite pièce flexible (C) a des brides agrandies première et seconde (24, 26) à ses extrémités opposées dans l'axe, lesdites brides ayant des configurations coniques augmentant en dimension axiale quand lesdites brides s'étendent radialement vers l'extérieur.

12. Vanne selon les revendications 1 à 10, caractérisée en ce que ladite pièce flexible (C) a des brides première et seconde (24, 26) agrandies à ses extrémités opposées dans l'axe, lesdites brides comprenant chacune un anneau rigide (164, 166) disposé à l'intérieur.

13. Vanne selon la revendication 12, caractérisée en ce que lesdits anneaux rigides (164, 166) ont des ouvertures (230) les traversant, facilitant la connexion desdites brides.

14. Vanne selon les revendications 1 à 13, caractérisée en ce que la pièce flexible (C) est comprimée dans la direction axiale entre les première et seconde pièces (E) dans la Vanne assemblée.

15. Vanne selon la revendication 14, caractérisée en ce que ledit corps de Vanne (B) a une ouverture à pincement (86) disposée principalement perpendiculairement à ladite ouverture du corps (10) et caractérisée en ce que ledit corps (B) a aussi une partie guide (88) partant sur le même axe de ladite ouverture de pincement (86) et ladite partie guide (88) est dimensionnée pour recevoir une tige de ladite pièce de fermeture (96) pour maintenir linéaire le mouvement de ladite pièce de fermeture;

16. Vanne selon la revendication 15, caractérisée en ce qu'une pièce d'étanchéité (100) est interposée entre ladite tige de ladite pièce de fermeture (96) et ladite partie guide (88).

17. Vanne selon les revendications 14, 15 ou 16, caractérisée en ce que ladite pièce de fermeture (96) a une extrémité lisse et arrondie (98) pour engager ladite pièce flexible (C).

18. Vanne selon la revendication 17, caractérisée en ce que ladite pièce de fermeture (96) a une configuration cylindrique avec une extrémité arrondie et sphérique (98).

19. Vanne selon la revendication 17, caractérisée en ce que ladite pièce de fermeture (96) a une configuration en couteau avec une extrémité lisse et arrondie (98)

20. Vanne selon la revendication 17, caractérisée en ce que ladite pièce de fermeture a une extrémité principalement semi-cylindrique (210).

21. Vanne selon une ou plusieurs des revendications 1 à 20, caractérisée en ce que ladite pièce de commande (122) a une tige indicatrice (142) à son extrémité éloignée de ladite pièce de fermeture (96) de telle manière que ladite tige indicatrice (142) sort dudit corps (B) dans la position de Vanne ouverte.

22. Vanne selon une ou plusieurs des revendications 1 à 21, caractérisée en ce qu'une pièce enveloppe (170) est reçue autour de ladite pièce flexible (C) et a une dimension extérieure en diamètre adaptée pour réception serrée dans l'alésage axial (10) dudit corps de Vanne (B), et ladite pièce enveloppe (170) a une ouverture (220) passant à travers une paroi latérale de cette pièce enveloppe et la pièce de fermeture (96) est adaptée pour réception serrée à travers ladite ouverture (220).

23. Vanne selon la revendication 21, caractérisée ladite pièce flexible (C) a une couche de renfort (186) le long d'une partie de sa périphérie.

24. Vanne selon la revendication 8, caractérisée en ce que ladite poignée (190) est sur une tige de poignée (192) et un moyen (202, 204) est prévu pour minimiser la transmission de couple entre ladite tige de poignée (192) et ladite pièce de commande (122).

25. Vanne selon la revendication 24, caractérisée en ce que ledit moyen de minimiser le couple a une surface principalement conique définie sur ladite pièce de commande (122) ou sur ladite tige de commande (192).

26. Vanne selon la revendication 22 ou 23, caractérisée en ce que ladite pièce enveloppe (170) a une zone plane (226) le long d'une surface intérieure de cette pièce pour tenir compte de la dilatation latérale de ladite pièce flexible (C) pendant la fermeture de la Vanne.
